# EUROPÄISCHE PATENTSCHRIFT

(11) **EP 3 157 692 B1**
(45) Veröffentlichungstag und Bekanntmachung des Hinweises auf die Patenterteilung: **03.10.2018**
(21) Anmeldenummer: 15726945.7
(22) Anmeldetag: 01.06.2015
(51) Int. Cl.: B21K 25/00, B23P 11/00, F16B 17/00

(54) **VERFAHREN ZUM HERSTELLEN EINER BAUTEILVERBINDUNG**
MANUFACTURING PROCESS OF A CONNECTION ELEMENT
PROCEDE DE FABRICATION D'UN ELEMENT DE LIAISON

(30) Priorität: 18.06.2014 DE 102014211653
(43) Veröffentlichungstag der Anmeldung: 26.04.2017
(73) Patentinhaber: Bayerische Motoren Werke Aktiengesellschaft, 80809 München (DE)
(72) Erfinder: VAN NIEKERK, Johann, 80993 München (DE)
(74) Vertreter: Diener, Reinhold Jürgen
(86) Internationale Anmeldenummer: PCT/EP2015/062120
(87) Internationale Veröffentlichungsnummer: WO 2015/193092

(56) Entgegenhaltungen:
- DE-A1- 10 125 117
- DE-A1- 19 637 015
- KR-A- 20110 005 544
- US-A- 1 798 738
- US-A- 4 071 949

## Beschreibung

Die vorliegende Erfindung betrifft ein Verfahren zum Herstellen einer Bauteilverbindung gemäß den Merkmalen des Patentanspruches 1.

Aus der US 4 071 949 A ist ein Verfahren bekannt, bei der eine Kugel so mit einem Stempel in ein Bauteil eingepresst wird, dass sich zwischen der Kugel und dem Bauteil eine formschlüssige bzw. reibschlüssige Verbindung ergibt. Zum technischen Hintergrund der Erfindung zählen ferner die DE 196 37 015 A1, DE 101 25 117 A1, US 1798738 A sowie die KR 2011 0005544 A.

Aufgabe der Erfindung ist es, ein Verfahren zum Herstellen einer Bauteilverbindung zu schaffen, bei dem ein (Blech-)bauteil in einfacher Weise mit einem Verbindungselement verbunden wird.

Ausgangspunkt der Erfindung ist ein Verfahren zum Herstellen einer Bauteilverbindung, die ein erstes Bauteil und ein männliches Verbindungselement aufweist, welches mindestens eine Kugel oder mindestens ein kugelförmiges Element aufweist.

Der Kern der Erfindung besteht darin, dass die mindestens eine Kugel oder das mindestens eine kugelförmige Element des Verbindungselements in das erste Bauteil, insbesondere in das Material des ersten Bauteils, eingepresst wird, derart, dass sich zwischen dem ersten Bauteil und dem Verbindungselement eine formschlüssige und/oder reibschlüssige Verbindung ergibt, durch die das Verbindungselement translatorisch fest und drehfest mit dem ersten Bauteil verbunden ist.

Die Erfindung mag auf den ersten Blick sehr einfach erscheinen. Versuche haben ergeben, dass ein Verbindungselement, welches mindestens eine Kugel oder mindestens ein kugelförmiges Element aufweist, welche bzw.
welches in das erste Bauteil eingepresst wird, allein durch Einpressen sehr gut und fest mit dem ersten Bauteil verbindbar ist. Aufgrund der vollsymmetrischen Geometrie einer Kugel lassen sich mit einem Verbindungselement, welches mindestens eine Kugel oder mindestens ein kugelförmiges Element aufweist, qualitativ hochwertigere Pressverbindungen erreichen als mit vielen anderen Einpresselementgeometrien.

Das Verbindungselement kann aus mehreren Kugeln oder kugelförmigen Elementen gebildet sein. Alternativ dazu kann das Verbindungselement auch ein von dem kugelförmigen Element bzw. der Kugel abstehendes "Funktionselement", wie z.B. einen Bolzen, einen Gewindestift, Mehrkant o.ä. aufweisen.

Beim Einpressen der mindestens einen Kugel oder des mindestens einen kugelförmigen Elements in das Material des ersten Bauteils kann es zu einem Fließen des Materials des ersten Bauteils bis in einen Bereich oberhalb einer Äquatorebene der mindestens einen Kugel oder des mindestens einen kugelförmigen Elements kommen. Das Material des ersten Bauteils fließt gewissermaßen "um die Kugel oder das kugelförmige Element herum" und schmiegt sich eng anliegend an die Kugel bzw. das kugelförmige Element an, wodurch sich eine formschlüssige und/oder reibschlüssige Verbindung zwischen der Kugel oder dem kugelförmigen Element und dem ersten Bauteil ergibt. "Fließen" bedeutet in diesem Zusammenhang eine dauerhafte plastische Verformung.

Je nach dem, aus welchem Material die Kugel bzw. das kugelförmige Element und das erste Material besteht, und in welcher Art und Weise das Einpressen erfolgt, kann es sein, dass beim Einpressen der Kugel oder des kugelförmigen Elements in das erste Bauteil auch das Material des Verbindungselements, d.h. die mindestens eine Kugel oder das mindestens eine kugelförmige Element, fließt.

Nach der Erfindung ist vorgesehen, dass die mindestens eine Kugel oder das mindestens eine kugelförmige Element von einer ersten Seite des ersten Bauteils her in das erste Bauteil eingepresst wird und dass von einer der ersten Seite gegenüberliegenden Seite des ersten Bauteils mittels eines "Gegenhalterwerkzeugs" beim Einpressen gegengehalten wird.

Das Gegenhalterwerkzeug weist im Bereich der Stelle, an der die mindestens eine Kugel oder das mindestens eine kugelförmige Element in das erste Bauteil eingepresst wird, eine muldenartige Vertiefung auf, was beim Einpressen eine entsprechende höckerartige Erhebung an der Einpressstelle ergibt.

Es kann vorgesehen sein, dass das Verbindungselement mittels eines Presswerkzeugs in das erste Bauteil eingepresst wird, wobei das Presswerkzeug ein Oberwerkzeug und ein Unterwerkzeug aufweist, zwischen die das erste Bauteil eingebracht wird. Es kann vorgesehen sein, dass das Verbindungselement "aus dem Oberwerkzeug oder dem Unterwerkzeug heraus" in das erste Bauteil eingepresst wird. Bei dem Presswerkzeug kann es sich bspw. um ein Tiefziehwerkzeug handeln, mittels dem das erste Bauteil vor dem Einpressen oder während des Einpressens der mindestens einen Kugel oder des mindestens einen kugelförmigen Elements umgeformt, d.h. tiefgezogen wird.

Wesentlich für die Herstellung einer qualitativ hochwertigen und dauerhaft festen Verbindung ist, dass das erste Bauteil aus einem duktilen Material, wie z.B. Metall besteht. Beispielsweise kann das erste Bauteil aus Stahl oder Aluminium bestehen. Es kann sich bei dem ersten Bauteil also insbesondere um ein Stahlblech oder um ein Aluminiumblech handeln.

Das Verbindungselement bzw. die mindestens eine Kugel oder das mindestens eine kugelförmige Element kann aus einem anderen oder aus demselben Material wie das erste Bauteil bestehen. Vorzugsweise besteht das Verbindungselement aus einem Material, das mindestens die gleiche oder eine höhere Härte als das erste Bauteil aufweist. Insbesondere kann vorgesehen sein, dass das Verbindungselement bzw. die mindestens eine Kugel oder das mindestens eine kugelförmige Element aus Stahl besteht.

Nach einer Weiterbildung der Erfindung ist vorgesehen, dass das Verbindungselement ausschließlich durch Einpressen der mindestens einen Kugel oder des mindestens einen kugelförmigen Elements in das erste Bauteil mit dem ersten Bauteil verbunden ist. Das Verbindungselement braucht also nicht unbedingt zusätzlich in anderer Weise, etwa durch Schweißen oder Kleben, mit dem ersten Bauteil verbunden werden.

Nach einer Weiterbildung der Erfindung ist vorgesehen, dass die mindestens eine Kugel oder das mindestens eine kugelförmige Element in ein in dem ersten Bauteil vorgesehenes Durchgangsloch eingepresst wird, welches einen kleineren Durchmesser als die Kugel bzw. das kugelförmige Element aufweist.

Ein Durchgangsloch ist für das Einpressen des Verbindungselements aber nicht zwingend erforderlich. Versuche haben gezeigt, dass es auch möglich ist, die Kugel bzw. das kugelförmige Element in das "Vollmaterial" des ersten Bauteils einzupressen. Es kann vorgesehen sein, dass nach einem Einpressen der Kugel bzw. des kugelförmigen Elements in das "Vollmaterial" die Kugel bzw. das kugelförmige Element das erste Bauteil nicht durchsetzt bzw. durchstößt, d.h. dass die Kugel bzw. das kugelförmige Element "von unten her" vollständig mit Material des ersten Bauteils überdeckt ist.

Im Folgenden wird die Erfindung im Zusammenhang mit der Zeichnung näher erläutert. Es zeigen:
- Fig. 1, 2: das Einpressen einer Kugel in ein mit einem Loch versehenes blechartiges Bauteil und
- Fig. 3, 4: ein alternatives Ausführungsbeispiel gemäß der Erfindung.

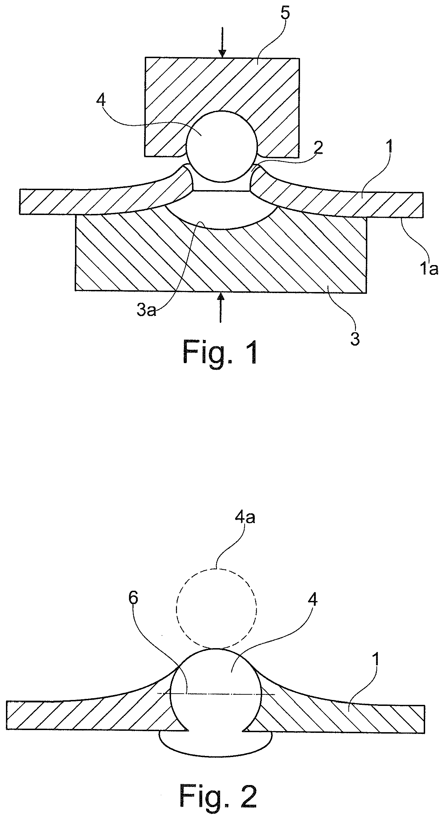

Fig. 1 zeigt ein erstes Bauteil 1, bei dem es sich bspw. um ein Stahl- oder Aluminiumblech handeln kann. Das erste Bauteil 1 weist ein Durchgangsloch 2 auf, das z. B. aus dem ersten Bauteil 1 ausgestanzt sein kann. Von einer Unterseite 1a des ersten Bauteils 1 her drückt ein Gegenhalterwerkzeug 3 gegen das erste Bauteil 1.

Eine Kugel 4, bei der es sich bspw. um eine Stahlkugel handelt, wird an der Stelle des Durchgangslochs 2 mittels eines Oberwerkzeugs 5 in das Durchgangsloch 2 des ersten Bauteils eingepresst. Wie aus Fig. 1 ersichtlich ist, ist der Durchmesser der Kugel 4 größer als der Durchmesser des Durchgangslochs 2.

Beim Einpressen der Kugel 4 in das Durchgangsloch 2 bzw. in das Material des ersten Bauteils 1 beginnt Material des ersten Bauteils 1 zu fließen. Das fließende Material schmiegt sich von außen her eng anliegend an die Kugel 4 an und fließt in eine muldenartige Vertiefung 3a des Gegenhalterwerkzeugs 3.

Wie aus Fig. 2 ersichtlich ist, erstreckt sich das Material des ersten Bauteils 1 im eingepressten Zustand bis in einen Bereich oberhalb einer Äquatorebene 6 der Kugel 4 und bis in einen Bereich unterhalb der Äquatorebene 6 der Kugel 4, wodurch sich eine formschlüssige und reibschlüssige Verbindung zwischen der Kugel 4 und dem ersten Bauteil 1 ergibt. Die Kugel 4 ist somit translatorisch fest und drehfest mit dem ersten Bauteil 1 verbunden. Je nach Material der Kugel 4 und des ersten Bauteils 1 und in Abhängigkeit von der Form des Gegenhalters 3 und des Oberwerkzeugs 5 kann es beim Einpressen der Kugel 4 in das Material des ersten Bauteils 1 auch zu einer Verformung der Kugel 4, d.h. zu einem Fließen des Materials der Kugel 4 kommen.

Wie aus Fig. 2 ersichtlich ist, fließt beim Einpressen des Kugel 4 Kugelmaterial in die muldenartige Vertiefung 3a des Gegenhalterwerkzeugs 3, was zu einem Hinterschnitt des eingepressten Verbindungselements mit dem ersten Bauteil 1 und somit zu einer unlösbaren formschlüssigen Verbindung führt.

Es sei ausdrücklich darauf hingewiesen, dass vorgesehen sein kann, dass die Kugel 4 nur ein Teil eines hier nicht näher dargestellten Verbindungselements ist. Beispielsweise kann ein Verbindungselement verwendet werden, das aus zwei Kugeln 4, 4a (vgl. Fig. 2) besteht. Alternativ dazu kann von der Kugel 4 auch ein Funktionselement, wie z.B. ein Gewindebolzen, eine Mutter, ein Mehrkant o.ä. abstehen.

Ein Verbindungselement, das, wie in Fig. 2 dargestellt, durch eine "Doppelkugel" (Kugeln 4, 4a) besteht, kann zur Verbindung des ersten Bauteils 1 mit einem weiteren Bauteil (nicht dargestellt) verwendet werden. Beispielsweise kann auf die "obere Kugel 4a" ein Clipelement aus Kunststoff oder ein mit einem Loch versehenes anderes Bauteil, z.B. ein weiteres Blech oder Kunststoffbauteil aufgeclipst oder aufgeklemmt werden.

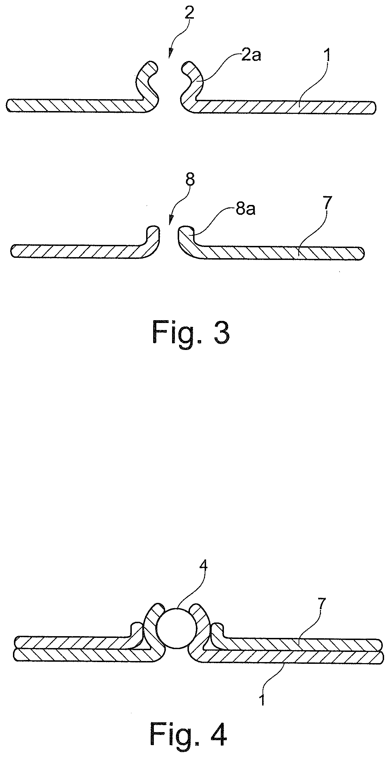

Fig. 3 zeigt ein erstes Bauteil 1 (z.B. Metallblech), das ein Durchgangsloch 2 mit einem nach oben aufgebogenen Kragen 2a aufweist. Der Klemmkragen 2a ist konkav gewölbt, komplementär zur Form einer hier nicht dargestellten Kugel.

Ferner ist ein zweites Bauteil (z.B. Blech) 7 vorgesehen, das ein Durchgangsloch 8 mit einem nach oben aufgebogenen Kragen 8a aufweist.

Zum Verbinden der beiden Bauteile 1 und 7 wird das Bauteil 7 "von oben her" auf das Bauteil 1 aufgestzt, derart, dass der Kragen 8a den Klemmkragen 2a von außen her umgreift. Anschließend wird eine Kugel 4 (z.B. Stahlkugel) von oben her oder von unten her in das Durchgangsloch 2 des ersten Bauteils 1 eingepresst. Dabei wird der Klemmkragen 2a elastisch aufgebogen und federt nach dem Einpressen der Kugel 4 wieder ein. Im eingepressten Zustand drückt der Klemmkragen 2a von außenher gegen die Kugel 4.

## Patentansprüche

1. Verfahren zum Herstellen einer Bauteilverbindung, die ein erstes Bauteil (1) und ein männliches Verbindungselement (4, 4a) aufweist, welches mindestens eine Kugel (4) oder mindestens ein kugelförmiges Element aufweist, wobei
die mindestens eine Kugel (4) oder das mindestens eine kugelförmige Element in das erste Bauteil (1) eingepresst wird, derart, dass sich zwischen dem ersten Bauteil (1) und dem Verbindungselement (4, 4a) eine formschlüssige und/oder reibschlüssige Verbindung ergibt, durch die das Verbindungselement (4, 4a) translatorisch fest und drehfest mit dem ersten Bauteil (1) verbunden ist, **dadurch gekennzeichnet, dass** die mindestens eine Kugel oder das mindestens eine kugelförmige Element von einer ersten Seite des ersten Bauteils (1) her in das erste Bauteil (1) eingepresst wird, wobei von einer der ersten Seite gegenüberliegenden zweiten Seite des ersten Bauteils (1) mittels eines Gegenhalterwerkzeugs (3) beim Einpressen gegengehalten wird, wobei das Gegenhalterwerkzeug (3) im Bereich der Stelle, an der die mindestens eine Kugel oder das mindestens eine kugelförmige Element in das erste Bauteil eingepresst wird, eine muldenartige Vertiefung aufweist, so dass sich beim Einpressen eine entsprechende höckerartige Erhebung an der Einpressstelle ergibt.

2. Verfahren nach Anspruch 1, **dadurch gekennzeichnet, dass** beim Einpressen Material des ersten Bauteils (1) bis in einen Bereich oberhalb einer Äquatorebene (6) der mindestens einen Kugel (4) oder des mindestens einen kugelförmigen Elements fließt und sich an die Kugel (4) oder das kugelförmige Element eng anliegend anschmiegt.

3. Verfahren nach Anspruch 1 öder 2, **dadurch gekennzeichnet, dass** beim Einpressen der mindestens einen Kugel (4) oder des mindestens einen kugelförmigen Elements die mindestens eine Kugel (4) oder das mindestens eine kugelförmige Element fließt und sich plastisch verformt.

4. Verfahren nach einem der Ansprüche 1 bis 3, **dadurch gekennzeichnet, dass** das Verbindungselement (4, 4a) mittels eines Presswerkzeugs in das erste Bauteil eingepresst wird, wobei das Presswerkzeug ein Oberwerkzeug (5) und ein Unterwerkzeug (3) aufweist, zwischen die das erste Bauteil (1) eingebracht wird, wobei das Verbindungselement (4, 4a) aus dem Oberwerkzeug (5) oder dem Unterwerkzeug (3) heraus in das erste Bauteil (1) eingepresst wird.

5. Verfahren nach einem der Ansprüche 1 bis 4, **dadurch gekennzeichnet, dass** das erste Bauteil aus einem duktilen Material, insbesondere aus Metall besteht.

6. Verfahren nach Anspruch 5, **dadurch gekennzeichnet, dass** das erste Bauteil (1) aus Stahl oder Aluminium besteht.

7. Verfahren nach einem der Ansprüche 1 bis 6, **dadurch gekennzeichnet, dass** die mindestens eine Kugel oder das mindestens eine kugelförmige Element oder das gesamte Verbindungselement (4, 4a) aus Stahl besteht.

8. Verfahren nach einem der Ansprüche 1 bis 7, **dadurch gekennzeichnet, dass** das Verbindungselement (4, 4a) ausschließlich durch Einpressen in das erste Bauteil (1) mit dem ersten Bauteil (1) verbunden wird.

9. Verfahren nach einem der Ansprüche 1 bis 8, **dadurch gekennzeichnet, dass** die mindestens eine Kugel (4) oder das mindestens eine kugelförmige Element das erste Bauteil (1) durchsetzt.

10. Verfahren nach einem der Ansprüche 1 bis 9, **dadurch gekennzeichnet, dass** ein Verbindungselement (4, 4a) verwendet wird, das aus genau zwei miteinander verbundenen Kugeln (4, 4a) oder zwei miteinander verbundenen kugelförmigen Elementen besteht.

11. Verfahren nach einem der Ansprüche 1 bis 10 **dadurch gekennzeichnet, dass** die mindestens eine Kugel (4) oder das mindestens eine kugelförmige Element in das Material des ersten Bauteils (1) eingepresst wird.

## Claims

1. A method for producing a component connection which has a first component (1) and a male connecting element (4, 4a) which has at least one sphere (4) or at least one spherical element, wherein
the at least one sphere (4) or the at least one spherical element is pressed into the first component (1) such that a positive and/or frictional connection is produced between the first component (1) and the connecting element (4, 4a), by means of which connection the connecting element (4, 4a) is connected in a translationally fixed and rotationally fixed manner to the first component (1),
**characterised in that**
the at least one sphere or the at least one spherical element is pressed into the first component (1) from a first side of the first component (1), with counter-holding being effected from a second side of the first component (1) which is located opposite the first side by means of a counter-holding tool (3) upon pressing-in, with the counter-holding tool (3), in the region of that point at which the at least one sphere or the at least one spherical element is pressed into the first component, having a trough-like indentation, so that upon pressing-in a corresponding hump-like elevation is yielded at the pressing-in point.

2. A method according to Claim 1, **characterised in that** upon the pressing-in material of the first component (1) flows into a region above an equatorial plane (6) of the at least one sphere (4) or of the at least one spherical element and moulds tightly against the sphere (4) or the spherical element.

3. A method according to Claim 1 or Claim 2, **characterised in that** upon the pressing-in of the at least one sphere (4) or of the at least one spherical element the at least one sphere (4) or the at least one spherical element flows and plastically deforms.

4. A method according to one of Claims 1 to 3, **characterised in that** the connecting element (4, 4a) is pressed into the first component by means of a pressing tool, the pressing tool having an upper tool (5) and a lower tool (3), between which the first component (1) is introduced, the connecting element (4, 4a) being pressed out of the upper tool (5) or the lower tool (3) into the first component (1).

5. A method according to one of Claims 1 to 4, **characterised in that** the first component comprises a ductile material, especially metal.

6. A method according to Claim 5, **characterised in that** the first component (1) consists of steel or aluminium.

7. A method according to one of Claims 1 to 6, **characterised in that** the at least one sphere or the at least one spherical element or the entire connecting element (4, 4a) consists of steel.

8. A method according to one of Claims 1 to 7, **characterised in that** the connecting element (4, 4a) is connected to the first component (1) exclusively by pressing into the first component (1).

9. A method according to one of Claims 1 to 8, **characterised in that** the at least one sphere (4) or the at least one spherical element penetrates the first component (1).

10. A method according to one of Claims 1 to 9, **characterised in that** a connecting element (4, 4a) which consists of precisely two spheres (4, 4a) connected together or two spherical elements connected together is used.

11. A method according to one of Claims 1 to 10, **characterised in that** the at least one sphere (4) or the at least one spherical element is pressed into the material of the first component (1).

## Revendications

1. Procédé d'obtention d'un assemblage de composants comprenant un premier composant (1) et un élément de liaison mâle (4, 4a) qui comporte au moins une sphère (4) ou au moins un élément sphéroïde, selon lequel
la sphère (4) ou l'élément sphéroïde est introduit à force dans le premier composant (1) de façon à obtenir entre le premier composant (1) et l'élément de liaison (4, 4a) une liaison par la forme et/ou une liaison par friction par laquelle l'élément de liaison (4, 4a) est relié solidairement en translation et en rotation au premier composant (1),
**caractérisé en ce que**
la sphère ou l'élément sphéroïde est introduit à force dans le premier composant (1) à partir d'une première face de celui-ci, et, est maintenu lors de l'introduction à force à partir de la seconde face du premier composant (1) située à l'opposé de la première face, au moyen d'un outil de retenue antagoniste (3), l'outil de retenue antagoniste (3) comportant, dans la zone de l'emplacement sur lequel la sphère ou l'élément sphéroïde est introduit à force dans le premier composant, un évidement en forme d'auge, de sorte que lors de l'introduction à force on obtienne une saillie en forme de bosse correspondante au niveau de l'emplacement d'introduction à force.

2. Procédé conforme à la revendication 1,
**caractérisé en ce que**
lors de l'introduction à force du matériau du premier composant (1) flue jusque dans une zone située au-dessus du plan équatorial (6) de la sphère (4) ou de l'élément sphéroïde et se conforme en s'appliquant étroitement à la sphère (4) ou à l'élément sphéroïde.

3. Procédé conforme à la revendication 1 ou 2,
**caractérisé en ce que**
lors de l'introduction à force de la sphère (4) ou de l'élément sphéroïde cette sphère (4) ou cet élément sphéroïde flue et se déforme plastiquement.

4. Procédé conforme à l'une des revendications 1 à 3,
**caractérisé en ce que**
l'élément de liaison (4, 4a) est introduit à force dans le premier composant au moyen d'un outil de presse, l'outil de presse comprenant un outil supérieur (5) et un outil inférieur (3) entre lesquels le premier composant (1) est positionné, l'élément de liaison (4, 4a) étant introduit à force dans le premier composant (1) à partir de l'outil supérieur (5) ou de l'outil inférieur (3).

5. Procédé conforme à l'une des revendications 1 à 4,
**caractérisé en ce que**
le premier composant est réalisé en un matériau ductile, en particulier en métal.

6. Procédé conforme à la revendication 5,
**caractérisé en ce que**
le premier composant (1) est réalisé en acier ou en aluminium.

7. Procédé conforme à l'une des revendications 1 à 6,
**caractérisé en ce que**
la sphère ou l'élément sphéroïde ou la totalité de l'élément de liaison (4, 4a) est réalisé en acier.

8. Procédé conforme à l'une des revendications 1 à 7,
**caractérisé en ce que**
l'élément de liaison (4, 4a) est exclusivement relié au premier composant (1) par introduction à force dans ce premier composant (1).

9. Procédé conforme à l'une des revendications 1 à 8,
**caractérisé en ce que**
la sphère (4) ou l'élément sphéroïde traverse le premier composant (1).

10. Procédé conforme à l'une des revendications 1 à 9,
**caractérisé en ce que**
l'on utilise un élément de liaison (4, 4a) qui est constitué d'exactement deux sphères ou deux éléments sphéroïdes (4, 4a) reliés entre eux.

11. Procédé conforme à l'une des revendications 1 à 10,
**caractérisé en ce que**
la sphère (4) ou l'élément sphéroïde est introduit à force dans le matériau du premier composant (1).
